# EUROPEAN PATENT APPLICATION

(11) **EP 1 526 071 A1**
(43) Date of publication of application: **27.04.2005**
(21) Application number: 04380030.9
(22) Date of filing: 11.02.2004
(51) Int. Cl.: B64D 17/02, B64C 31/06

(54) **Horizontal ribbons for paraglide**

(30) Priority: 20.10.2003 ES 200302381 U
(71) Applicant: Martinez, Mula Gines, 45122 Arges (ES)
(72) Inventor: Martinez, Mula Gines, 45122 Arges (ES)

(57) **Abstract**

A system of bars of low weight material, arranged in the inside of the paraglide, so that they diminish the falls of the planes of flight in the paraglide, and that diminish the risk to enter in a dangerous configuration for the flight that would provoke fears to the pilots, accidents and at least a decrease in the likings for free flight in the paraglide modality.

**Horizontal Ribs** - Placed in the direction of widthways of the paraglide, they are formed of several sections of bars, joint by sockets, and joint to the rest of the paraglide by a piece called "system of connection between bars".
Manual - (the pilot mounts them on land and places them in the inside of the paraglide before taking off), once in the air, he/she can no longer operate them
Automatic - (the pilot mounts them on land before taking off) in folded position (ready for the release shot), once in the air, he/she forces them to shoot, taking the straight position. Their main components are: double sockets with spin axis, sockets with a slot in half of their body for the placing of the retention nail, springs of opening of the bar sections

**System of connection between bars** - A piece of rectangular prismatic shape, with a face in the shape of a funnel (to facilitate its connection with another bar), with a slot in its interior that passes through it.
Automatic - (for automatic ribs), they carry inside a mechanism that produces the shot and releases the rib (folded at that moment)
Its main components are: spring, trigger, a lock, and a nail of retention-shoot (of the bar sections when in folded position)
Non automatic - (for manual ribs), it has no movable pieces.

**Assembly** - They go placed inside pockets, specifically for it, in the inside of the paraglide

## Description

**Purpose of the Invention** - The next invention as it is expressed in the descriptive memory, reffers to a device that has been invented to establish the flight of the paraglide, in the instant when a fall of one or the two planes of flight presents, braking the aeordynamics of the flight, introducing therefore a factor of security in the air and reducing the accidents.

It avoids the fall of the planes widthways of the paraglide, in the area protected by the horizontal ribs between the leading edge and the trailing edge.

This invention is complemented with another one already patented, that serves it as support.

Both together, give a complete security of flight longways and widthways of the paraglide, protecting it from the fall of the planes, in the whole protected area

**Antecedents of the invention** - A similar device is known, patent to the name of the same owner, that works protecting the paraglide to the longways of it

### Description of the invention

It is composed of two parts that make a unit of horizontal rib for paraglide: bar of the rib and system of connection with the tip of the stabilizer bar.
- Bar of the rib : Can be: of a single manual section; Of several manual sections; Of several automatic sections.
- System of connection with the tip of the stabilizer bar. Can be: -Non automatic,
- Automatic

### DESCRIPTION OF THE PARTS

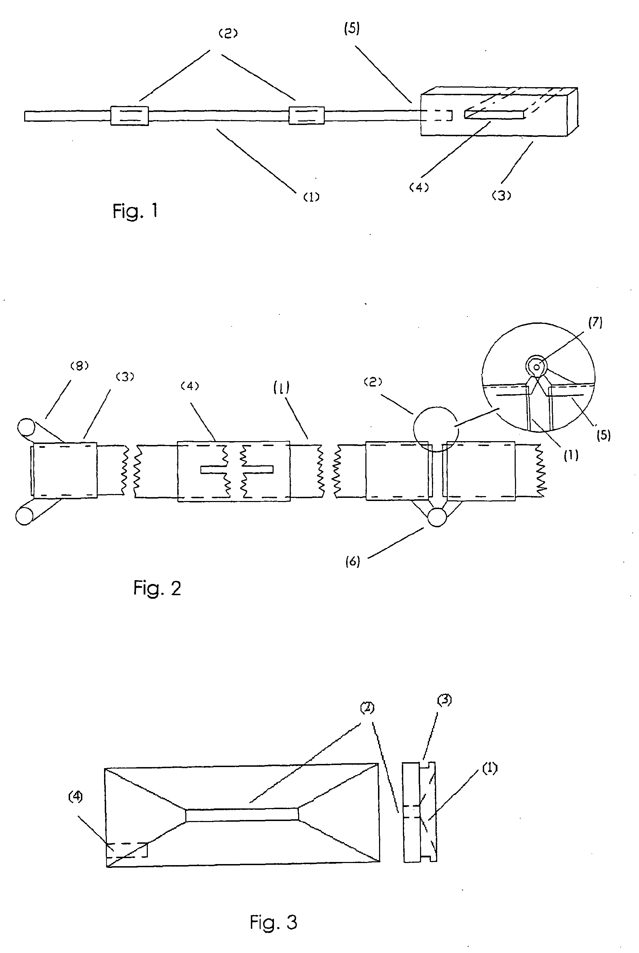

Several sections Manual Bar - Several sections Fig. 1-1 of bar joint manually by a system of sockets Fig. 1-2 by pressure or screwing, which a tip of the bar is connected to the connection piece with the stabilizer bar, Fig. 1-5

Automatic bar - Several sections of bar Fig. 2 joint mecanically Fig. 2-2, with reinforce sockets in its tips Fig. 2-3, which the sections of the bars carry a socket in the central part of their body, which contains a slot Fig. 2-4, which goes through the bar and the socket, which carries a spring Fig. 2-5 by section of bar and a pin Fig. 2-7 of joint and turn, which in the tips of the bars go some sockets, with some wings set at 180 degrees Fig, 2-8 (female in a tip and male in the other) and which carries a security lock, which a tip of the set of the bar, goes connected to the piece called of connection with the tip of the stabilizer bar fig. 1-5

### SYSTEM OF CONNECTION WITH THE STABILIZER BAR

Non automatic mode: A piece Fig. 1-2 of a single block, which has no moving parts, in a rectangular prismatic shape, has a side with a prismatic funnel finished Fig. 3-1 , with a slot Fig. 3-2 which goes through it from the center of the funnel to the other side, for the way and conecction to the tip of the stabilizer bar.

Automatic mode: A mechanism with exterior shape of a rectangular prism with a side in a prismatic funnel way finished Fig.3 , with a slot that goes through it from the center of the funnel to the other side Fig.3-2

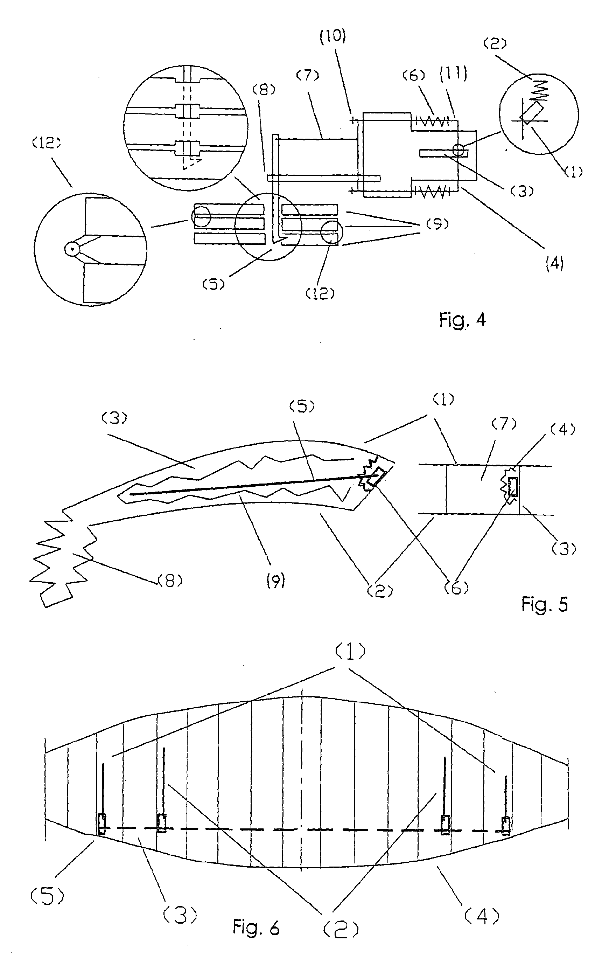

Which in the inside has a mechanism Fig.4- destined to produce a shot to free a nail Fig. 4-5 of retention/release of the tips of the bar that will form the final bar of the rib (which in that moment are in folded position Fig. 4-9)

That the mechanism has a twig. Fig 4-11 that forms a rectangle with springs Fig. 4-6, with female screws for adjusting the pressure of the springs Fig. 4-10, a strut Fig. 4-7 and an arm lever Fig. 4-8 which serves as point of support and turn for the nail of retention and release.

It has a security lock Fig. 4-1 that works on one of the sides of the rectangle of the twig and that the same side goes through the slot of entrance at the tip of the stabilizer bar.

### PLACING OF THE HORIZONTAL RIBS FOR PARAGLIDE

Manual. (of a single section or several, Fig.5), placed in the inside of a drawer Fig. 5-7, they go placed in a pocket Fig. 5-4 sewed to a rib Fig. 5-3 all longways of the paraglide in a way that it doesn't touches the extrados Fig.5-1 neither the intrados Fig.5-2

The piece of connection Fig.5-6 , with the tip of the stabilizer bar is held with a fixed position to the rib.

Automatic - All the mechanism related to the sections of bars, goes inside of a bag of the propper dimensions for it to be opened without suffering from blockings, the paraglide's fabric bag is held to the inside of the drawer (between two ribs) in a fixed horizontal position, neither touching the extrados nor the intrados this way it doesn't disturb the flight of the paraglide when the ribs are not used.

The piece of connection with the tip of the stabilizer bar goes hold in a fixed position in the mouth of the bag, fixed to a rib of the paraglide in the leading edge.

### Description of the figures

Figure 1 - Manual several sections bar - (1) Sections of bar (2) Sockets of union (3) System of connection with the stabilizer bar (4) Entrance Slot of the tip of the stabilizer bar (5) Attachment of the rib with the system of connection with the stabilizer bar
Figure 2 - Automatic Bar - (1) sections of bar (2) Union mechanic system (wings plus pin) (3) sockets of the tips with wings (4) Central Socket of the bar (5) Spring (6) Lock (7) Pin (8) wing
Figure 3 - System of connection with the stabilizer bar - (1) prismatic funnel (2) Slot for the tip of the stabilizer bar (3) Lower for engaging with guide cylinder of fabric (4) Attachment with the rib
Figure 4 - Automatic System of connection in positive mode (1) lock (2) Spring of lock (3) Entrances Slot for the tip of the stabilizer bar (4) Shooting trigger (5) Nail of retention/release (6) Springs placed in positive shoot mode (7) stunt (8) Arm of support and turn (9) Bars in folded position (10) Female screw for adjusting the springs (11) Twig in rectangular shape (12) System of connection between bar sections
Figure 5 - Placing of horizontal rib (1) Intrados (2) Extrados (3) rib of the paraglide (4) Pocket (5) Horizontal Rib (6) System of connection with the stabilizer bar (7) Drawer (8) Fall of the trailing edge
Figure 6 - Placing of horizontal rib, aereal sight (ej. 4 ribs) (1) Exterior horizontal ribs (2) Interior horizontal ribs (3) Stabilizer bar (4) Leading edge (5) System of connection with stabilizer bar

### Description of one of the favourite ways of realization

At the sight of what has been explained with its figures, it is chosen as favourite way of realization the horizontal rib for paraglide conformed by : a manual horizontal rib of several sections and system of union with the stabilizer bar, in non automatic mode, that is explained in the following way:
Several sections of bar Fig. 1-1 joint manually by a system of sockets Fig. 1-2 by pressure or screw
A piece Fig.3 of a single block which has no moving parts, of a prismatic rectangular shape, which one of the sides has a funnel with prismatic shape Fig. 3-1 with a slot that goes through it, from the center of the funnel to the other side fig. 2-2, for the way and connection with the tip of the stabilizer bar.

## Claims

1. Horizontal rib for paraglide. **Caracterized by** : Which is composed by several sections of bar joint manually by a system of articulated sockets, by pressure or screwed

2. Horizontal rib for paraglide. **Caracterized by** : Which is composed by a piece of prismatic rectangular shape which has no moving parts, with a side finished in a prismatic funnel shape, with a slot that goes through it from the center of the funnel to the other side

3. Horizontal rib for paraglide. **Caracterized by** : Which is composed by several sections of bar joint mechanically, that carry at the tips sockets with wings, a pin of turn and a lock, and some sockets in the center with a slot that goes through socket and bars, and that have a spring at the tip of every bar

4. Horizontal rib for paraglide. **Caracterized by**: Which is composed of a system of automatic connection with the tip of the stabilizer bar. A piece of prismatic rectangular shape with one of its sides finished in a prismatic funnel shape, a slot that goes through the piece from the center of the funnel to the other side, which has a mechanism, that carris a twig, which conforms a rectangle, two springs, female screws for adjusting the pressure of the springs, a lock and at one tip goes a nail that juts out
